(19) Europäisches Patentamt
European Patent Office
Office européen des brevets

(11) **EP 2 996 001 A1**

(12) **EUROPÄISCHE PATENTANMELDUNG**

(43) Veröffentlichungstag:
16.03.2016 Patentblatt 2016/11

(51) Int Cl.:
***G05B 13/02*** *(2006.01)*

(21) Anmeldenummer: **14184183.3**

(22) Anmeldetag: **10.09.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Grothmann, Ralph**
**80796 München (DE)**
• **Tietz, Christoph**
**85521 Ottobrunn (DE)**
• **Zimmermann, Hans-Georg**
**82319 Starnberg/Percha (DE)**

(54) **Verfahren zur rechnergestützten Analyse eines Datensatzes aus Beobachtungen**

(57) Die Erfindung betrifft ein Verfahren zur rechnergestützten Analyse eines Datensatzes aus Beobachtungen (OB), wobei der Datensatz für jede Beobachtung (OB) einen Datenvektor enthält, der die Werte einer Mehrzahl von Eingangsgrößen (x1, x2, ..., xN) und den Wert einer Zielgröße (y) umfasst. In dem erfindungsgemäßen Verfahren wird basierend auf dem Datensatz eine neuronale Netzstruktur (NNS) aus mehreren unterschiedlich initialisierten neuronalen Netzen (NN1, NN2, ..., NNm) gelernt, wobei die neuronalen Netze (NN1, NN2, ..., NNm) jeweils eine Eingangsschicht(I1, I2, ..., Im), eine oder mehrere versteckte Schichten (H1, H2, ..., Hm) und eine Ausgangsschicht (O1, O2, ..., Om) umfassen, wobei die Eingangsschicht (I1, I2, ..., Im) eines jeweiligen neuronalen Netzes (NN1, NN2, ..., NNm) zumindest einen Teil der Eingangsgrößen (x1, x2, ..., xN) umfasst und die Ausgangsschicht (O1, O2, ..., Om) eines jeweiligen neuronalen Netzes (NN1, NN2, ..., NNm) die Zielgröße (y) umfasst, wobei die neuronale Netzstruktur (NNS) den Mittelwert der Zielgrößen (y) der Ausgangsschichten (O1, O2, ..., Om) der neuronalen Netze (NN1, NN2, ..., NNm) ausgibt. Mittels der gelernten neuronalen Netzstruktur (NNS) werden Sensitivitätswerte (SV) ermittelt und gespeichert, wobei jedem Sensitivitätswert (SV) eine Beobachtung (OB) und eine Eingangsgröße (x1, x2, ..., xN) zugeordnet ist und der jeweilige Sensitivitätswert (SV) die Ableitung der Zielgröße (y) der zugeordneten Beobachtung (OB) nach der zugeordneten Eingangsgröße (x1, x2, ..., xN) enthält.

FIG 1

EP 2 996 001 A1

**Beschreibung**

Die Erfindung betrifft ein Verfahren zur rechnergestützten Analyse eines Datensatzes aus Beobachtungen sowie ein entsprechendes Computerprogrammprodukt und ein entsprechendes Computerprogramm.

In einer Vielzahl von Anwendungsgebieten ist es wünschenswert, aus einem Datensatz von Beobachtungen einen Zusammenhang zwischen Eingangsgrößen und einer Zielgröße innerhalb der Beobachtungen abzuleiten. Der Datensatz enthält dabei für jede Beobachtung einen Datenvektor, der die Werte von Eingangsgrößen und einen zugeordneten Wert einer Zielgröße umfasst.

Im Bereich der Regelung von technischen Systemen besteht häufig der Bedarf, den Einfluss bzw. die Relevanz von Zustandsgrößen des technischen Systems auf eine Zielgröße des technischen Systems zu erkennen, um basierend darauf z.B. ein geeignetes datengetriebenes Modell zu lernen, welches die Zielgröße in Abhängigkeit von relevanten Eingangsgrößen prädiziert. Mittels des datengetriebenen Modells kann die Regelung des technischen Systems basierend auf der Prädiktion geeignet festgelegt werden. Das technische System kann z.B. eine Gasturbine sein, deren Zustandsgrößen verschiedene Temperaturen, Kraftstoffmengen, Brennstoffgemische, Stellungen von Turbinenschaufeln und dergleichen umfassen können. Die Zielgröße kann für eine solche Gasturbine z.B. der Ausstoß an Stickoxiden bzw. ein Brennkammerbrummen (d.h. erhöhte Vibrationen in der Brennkammer) sein. Durch geeignete Modellierung der Gasturbine basierend auf den Eingangsgrößen, welche den größten Einfluss auf die Zielgröße haben, können hierdurch Stickoxidemissionen bzw. Brennkammerbrummen vorhergesagt werden und demzufolge durch geeignete Veränderung von Stellgrößen einer hohen Stickoxidemission bzw. einem Brennkammerbrummen entgegengewirkt werden.

Ein weiterer Anwendungsbereich der Erfindung ist die Analyse von Produktionschargen, wobei sich in diesem Fall jede Beobachtung auf entsprechende Parameter der Produktion der betrachteten Produktionscharge bezieht. Die Zielgröße entspricht dabei einem Qualitätsparameter der produzierten Charge. Dieser Qualitätsparamater kann z.B. durch die Anzahl von Ausfällen von produzierten technischen Geräten einer Charge innerhalb eines Zeitraums nach Inbetriebnahme des jeweiligen Geräts repräsentiert werden, sofern sich die Produktionscharge auf die Herstellung solcher technischer Geräte bezieht. Indem man ermittelt, welche Produktionsparameter besonders großen Einfluss auf die Qualität der Produktionscharge haben, können hierdurch die Produktionsprozesse analysiert werden und durch Veränderung der Eingangsgrößen mit besonders großem Einfluss auf die Produktion die Qualität der hergestellten Produkte verbessert werden.

Aus dem Stand der Technik sind statistische Tests bekannt, mit denen ein Datensatz aus Beobachtungen im Hinblick auf die Relevanz von Eingangsgrößen auf eine Zielgröße analysiert werden kann. Diese Verfahren können jedoch in der Regel keine nicht-linearen Zusammenhänge erkennen und sind für hochdimensionale Datenvektoren mit einer großen Anzahl von Eingangsgrößen nicht geeignet.

Aufgabe der Erfindung ist es, ein Verfahren zur rechnergestützten Analyse eines Datensatzes aus Beobachtungen zu schaffen, mit dem einfach und zuverlässig der Einfluss von Eingangsgrößen auf mindestens eine Zielgröße ermittelt werden kann.

Diese Aufgabe wird durch die unabhängigen Patentansprüche gelöst. Weiterbildungen der Erfindung sind den abhängigen Ansprüchen definiert.

Im Rahmen des erfindungsgemäßen Verfahrens wird ein Datensatz aus Beobachtungen verarbeitet, der für jede Beobachtung einen Datenvektor enthält, der die Werte einer Mehrzahl von Eingangsgrößen und den Wert einer Zielgröße umfasst. Gegebenenfalls kann der Datenvektor auch mehrere Zielgrößen beinhalten, wobei in diesem Fall das nachfolgend beschriebene Verfahren für jede der Zielgrößen (parallel oder aufeinander folgend) durchgeführt wird.

In einem Schritt a) des erfindungsgemäßen Verfahrens wird basierend auf dem Datensatz eine neuronale Netzstruktur aus mehreren unterschiedlich initialisierten neuronalen Netzen gelernt. Mit anderen Worten stellt der Datensatz die Trainingsdaten der neuronalen Netzstruktur dar. Die neuronalen Netze der neuronalen Netzstruktur umfassen jeweils eine Eingangsschicht, eine oder mehrere versteckte Schichten und eine Ausgangsschicht, wobei die Eingangsschicht eines jeweiligen neuronalen Netzes zumindest einen Teil der Eingangsgrößen umfasst und die Ausgangsschicht eines jeweiligen neuronalen Netzes die Zielgröße umfasst. Dabei gibt die neuronale Netzstruktur den Mittelwert der Zielgrößen der Ausgangsschichten der neuronalen Netze aus. Im Falle von mehreren Zielgrößen ist die neuronale Netzstruktur vorzugsweise derart ausgestaltet, dass die Ausgangsschicht des jeweiligen neuronalen Netzes die mehreren Zielgrößen umfasst und die neuronale Netzstruktur den Mittelwert für jede der Zielgrößen ausgibt.

In einem Schritt b) des erfindungsgemäßen Verfahrens werden mittels der gelernten neuronalen Netzstruktur Sensitivitätswerte ermittelt und gespeichert, wobei jedem Sensitivitätswert eine Beobachtung und eine Eingangsgröße zugeordnet ist und der jeweilige Sensitivitätswert die (mathematische) Ableitung der Zielgröße der zugeordneten Beobachtung nach der zugeordneten Eingangsgröße enthält. Mit anderen Worten stellt der Sensitivitätswert die obige Ableitung dar oder er ist ein Wert, der von dieser Ableitung abhängig ist, wobei vorzugsweise eine lineare Abhängigkeit zwischen Sensitivitätswert und Ableitung besteht, ggf. jedoch auch eine nicht-lineare Abhängigkeit vorliegen kann. Im Falle von mehreren Zielgrößen werden entsprechende Sensitivitätswerte für jede der mehreren Zielgrößen ermittelt.

Mit dem erfindungsgemäßen Verfahren kann auf einfache Weise über ein Ensemble von gelernten neuronalen Netzen der Einfluss von Eingangsgrößen auf eine Zielgröße ermittelt werden. Durch die Mittelung der Ausgaben der einzelnen neuronalen Netze werden Fluktuationen in den Zielgrößen der einzelnen Netze eliminiert. Durch die Bestimmung der Ableitung der Zielgröße in Bezug auf die Eingangsgrößen sind schnell solche Eingangsgrößen mit großem Einfluss auf die Zielgröße erkennbar. Die ermittelten und gespeicherten Sensitivitätswerte werden in einer bevorzugten Ausführungsform geeignet weiterverarbeitet bzw. auf einer Benutzerschnittstelle visualisiert, wie weiter unten näher beschrieben wird.

In einer besonders bevorzugten Ausführungsform werden die Sensitivitätswerte über eine modifizierte Fehlerrückpropagation von jeweiligen Eingangsgrößen in der neuronalen Netzstruktur ermittelt, wobei in der modifizierten Fehlerrückpropagation Gewichtungen zwischen den Schichten der neuronalen Netzstruktur nicht angepasst werden und anstatt des Residualfehlers die im Residualfehler enthaltene Ableitung der Zielgröße der zugeordneten Beobachtung nach der zugeordneten Eingangsgröße ausgegeben wird. In der detaillierten Beschreibung wird eine konkrete Ausgestaltung dieser Ausführungsform näher erläutert. Dabei ist zu berücksichtigen, dass die Fehlerrückpropagation (englisch: Error Backpropagation) im Rahmen des Lernens von neuronalen Netzen an sich bekannt ist. Mit dieser Fehlerrückpropagation werden die jeweiligen Eingangsgrößen durch das neuronale Netz von der Eingangsschicht zur Ausgangsschicht propagiert und anschließend der Fehler zwischen ausgegebener und tatsächlicher Zielgröße zur Eingangsschicht rückpropagiert. Dabei werden die Gewichtungen zwischen den Schichten modifiziert, um den verbleibenden Residualfehler möglichst klein zu halten. Die hier beschriebene Ausführungsform beruht auf der Kenntnis, dass durch eine einfache Abwandlung dieser Fehlerrückpropagation, bei der die Gewichtungen nicht verändert werden und anstatt des Residualfehlers die Ableitung ausgegeben wird, entsprechende Sensitivitätswerte auf einfache Weise berechnet werden können.

In einer weiteren, besonders bevorzugten Ausführungsform sind die neuronalen Netze der neuronalen Netzstruktur Feed-Forward-Netze. In einer weiteren Ausgestaltung umfasst eine Eingangsschicht eines jeweiligen neuronalen Netzes einen zufällig ausgewählten Teil der Eingangsgrößen. Mit anderen Worten werden der jeweiligen Eingangsschicht zufällig nur ein Teil aller Eingangsgrößen zugeführt.

In einer weiteren Ausgestaltung werden die gespeicherten Sensitivitätswerte an einer graphischen Benutzerschnittstelle (z.B. einem Monitor) geeignet visualisiert. Ein Benutzer bekommt hierüber Aufschluss, welche Eingangsgrößen besonders relevant für die entsprechende Zielgröße sind. In einer besonders bevorzugten Ausführungsform ist diese Visualisierung derart ausgestaltet, dass auf der graphischen Benutzerschnittstelle eine Matrix aus einer Vielzahl von Zeilen und Spalten wiedergegeben wird, wobei eine jeweilige Zeile eine Eingangsgröße und eine jeweilige Spalte eine Beobachtung repräsentiert oder wobei alternativ eine jeweilige Spalte eine Eingangsgröße und eine jeweilige Zeile eine Beobachtung repräsentiert. Dabei wird durch einen jeweiligen, zu einer Zeile und Spalte gehörigen Eintrag der Matrix visuell ein Sensitivitätswert codiert, der zu der Beobachtung und Eingangsgröße der entsprechenden Zeile und Spalte des Eintrags gehört.

Vorzugsweise wird das Vorzeichen der Ableitung codiert, welche in dem Sensitivitätswert des jeweiligen Eintrags der oben beschriebenen Matrix enthalten ist. In einer besonders bevorzugten Variante erfolgt dies über eine farbliche Kodierung. Vorzugsweise repräsentiert eine positive Ableitung eine andere Farbe als eine negative Ableitung und die Farbintensität der entsprechenden Farbe wird umso größer, je größer der Betrag der Ableitung ist. Hierdurch wird eine einfache und intuitive Visualisierung der Sensitivitätswerte geschaffen.

Alternativ oder zusätzlich zu der oben beschriebenen Matrix aus Sensitivitätswerten wird in einer weiteren Ausgestaltung auf der graphischen Benutzerschnittstelle die Summe der Sensitivitätswertsbeträge (d.h. der Absolutbeträge der Sensitivitätswerte) über alle Beobachtungen für eine jeweilige Eingangsgröße visualisiert, insbesondere in der Form eines Balkendiagramms. Gegebenenfalls können die Balken in aufsteigender bzw. in absteigender Reihenfolge der Summen angeordnet sein. In einer bevorzugten Variante ist der Balken mit der größten Summe der Sensitivitätswertsbeträge auf 1 normiert und alle anderen Balken werden relativ zu diesem Balken dargestellt. Mit anderen Worten können aus dem Balkendiagramm die Relativwerte der Länge der einzelnen Balken in Bezug auf den längsten Balken abgelesen werden, wobei der Relativwert für den Balken mit der größten Summe den Wert 1 aufweist.

In einer weiteren Variante des erfindungsgemäßen Verfahrens sind die Beobachtungen aufeinander folgenden Zeitpunkten zugeordnet, wobei die Beobachtung für einen jeweiligen Zeitpunkt Eingangsgrößen umfasst, die zu dem jeweiligen Zeitpunkt ermittelt wurden, sowie eine Zielgröße (und ggf. auch mehrere Zielgrößen), die zu dem jeweiligen Zeitpunkt oder zu einem späteren Zeitpunkt oder zu einem früheren Zeitpunkt ermittelt wurde. Auf diese Weise können mittels der neuronalen Netzstruktur des erfindungsgemäßen Verfahrens kausale (d.h. in die Zukunft gerichtete) Zusammenhänge zwischen Eingangsgrößen und Zielgröße und ggf. auch retro-kausale (d.h. in die Vergangenheit gerichtete) Zusammenhänge zwischen Eingangsgrößen und Zielgröße gelernt werden. Gegebenenfalls kann eine Beobachtung, die einem jeweiligen Zeitpunkt zugeordnet ist, neben den Eingangsgrößen zum jeweiligem Zeitpunkt auch Eingangsgrößen umfassen, die zu einem oder mehreren vergangenen Zeitpunkten ermittelt wurden.

In einer weiteren Ausgestaltung des erfindungsgemäßen Verfahrens werden die Schritte a) und b) iterativ wiederholt, wobei nach einem Schritt b) eine Anzahl von Eingangsgrößen, für welche die Summe der Sensitivitätswertsbeträge über alle Beobachtungen am größten ist, gespeichert wird und bei der nächsten Durchführung von Schritt a) nicht mehr als Eingangsgrößen in den Eingangsschichten der neuronalen Netze der neuronalen Netzstruktur berücksichtigt wird. Die Anzahl von Eingangsgrößen kann ggf. auch nur eine einzelne Eingangsgröße mit der größten Summe der Sensitivitätswertsbeträge umfassen. Die im Rahmen dieser Ausführungsform gespeicherten Eingangsgrößen repräsentieren dabei sehr gut diejenigen Eingangsgrößen mit dem größten Einfluss auf die Zielgröße.

In einer besonders bevorzugten Variante der soeben beschriebenen Ausführungsform werden in der neuronalen Netzstruktur als Eingangsgrößen zusätzlich eine oder mehrere Pseudo-Eingangsgrößen berücksichtigt, deren Werte in den Datenvektoren durch Zufallszahlen repräsentiert sind. Die Verteilung der Zufallszahlen orientiert sich vorzugsweise an den Verteilugen der Eingangsgrößen. Die iterative Wiederholung der Schritte a) und b) wird dann abgebrochen, wenn in Schritt b) die Anzahl von Eingangsgrößen, für welche die Summe der Sensitivitätswertsbeträge über alle Beobachtungen am größten ist, eine Pseudo-Eingangsgröße enthält. Auf diese Weise wird ein sehr gutes Abbruchkriterium basierend auf der Erkenntnis geschaffen, dass Eingangsgrößen, deren Einfluss Zufallszahlen gleichgestellt ist, für die Zielgröße nicht von Relevanz sind.

Ein bevorzugter Anwendungsbereich der Erfindung ist das Erkennen von Zusammenhängen zwischen Eingangsgrößen und einer Zielgröße im Rahmen des Betriebs eines technischen Systems. Dabei enthält der Datensatz aus Beobachtungen Datenvektoren umfassend Zustandsgrößen des technischen Systems zu aufeinanderfolgenden Betriebszeitpunkten. Ein Datenvektor entspricht einem jeweiligen Betriebszeitpunkt und dieser Datenvektor umfasst die ermittelten Werte der Eingangsgrößen zu dem jeweiligen Betriebszeitpunkt (und ggf. zu vergangenen Betriebszeitpunkten) sowie den Wert der Zielgröße zu dem jeweiligen Betriebszeitpunkt oder einem Betriebszeitpunkt, der gegenüber dem jeweiligen Betriebszeitpunkt in der Vergangenheit oder in der Zukunft liegt.

Wie bereits eingangs erwähnt, kann das Verfahren z.B. für ein technisches System in der Form einer Gasturbine eingesetzt werden, wobei die Zielgröße vorzugsweise die Emission von Stickoxiden ist. Die Eingangsgrößen können beliebige Zustandsgrößen bzw. veränderbare Stellgrößen an der Gasturbine umfassen, wie z.B. Temperaturen, Strömungsgeschwindigkeiten, Brennstoffmischverhältnisse, Positionen von Turbinenschaufeln und dergleichen.

Gegebenenfalls kann der im erfindungsgemäßen Verfahren analysierte Datensatz aus Beobachtungen auch Datenvektoren zu unterschiedlichen Produktionschargen eines Produkts umfassen, wobei eine Produktioncharge ggf. auch nur aus einem produzierten Produkt bestehen kann. Dabei enthält ein jeweiliger Datenvektor als Werte der Eingangsgrößen Parameter der Produktion der entsprechenden Produktioncharge und als Werte der Zielgröße ein Qualitätsmaß der entsprechenden Produktioncharge. Zum Beispiel kann der Datensatz die Produktion von Röntgenröhren betreffen, die in einem Computertomographen verbaut werden. Das Qualitätsmaß kann z.B. dadurch repräsentiert werden, ob bzw. wie häufig produzierte Produkte innerhalb eines Zeitraums ab Verwendung des Produkts ausfallen.

Das erfindungsgemäße Verfahren kann ggf. auch zur Modulierung von Rohstoffpreisen verwendet werden. In diesem Fall umfasst der Datensatz aus Beobachtungen Datenvektoren, welche als Wert der Zielgröße einen Rohstoffpreis und als Werte der Eingangsgröße Einflussfaktoren auf den Rohstoffpreis (z.B. Zinssätze, Devisenkurse oder andere Rohstoffpreise) enthalten.

Neben dem oben beschriebenen Verfahren betrifft die Erfindung ferner ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Darüber hinaus umfasst die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ausführungsbeispiele der Erfindung werden nachfolgend anhand der beigefügten Figuren detailliert beschrieben.

Es zeigen:

Fig. 1 ein Ensemble aus mehreren neuronalen Netzen, welches in einer Ausführungsform des erfindungsgemäßen Verfahrens zur Berechnung von Sensitivitätswerten verwendet wird;

Fig. 2 eine schematische Darstellung einer modifizierten Fehlerrückpropagation, mit der in einer Ausführungsform des erfindungsgemäßen Verfahrens die Sensitivitätswerte bestimmt werden;

Fig. 3 eine schematische Darstellung einer graphischen Wiedergabe von Sensitivitätswerten gemäß einer Ausführungsform des erfindungsgemäßen Verfahrens; und

Fig. 4 ein Balkendiagramm zur Visualisierung der Wichtigkeit von Eingangsgrößen gemäß einer Ausführungsform des erfindungsgemäßen Verfahrens.

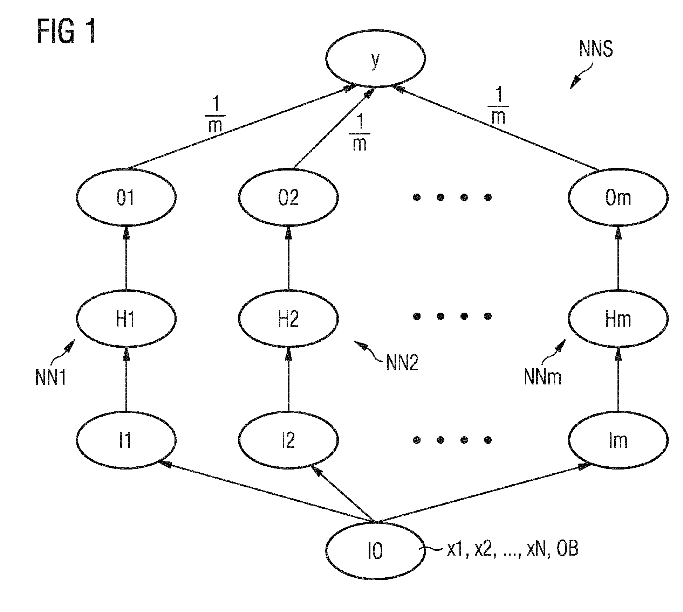

Das erfindungsgemäße Verfahren dient dazu, um aus einem Datensatz aus einer Vielzahl von Beobachtungen Zusammenhänge zwischen Eingangsgrößen und einer Zielgröße zu erkennen. Die einzelnen Beobachtungen werden jeweils durch einen Datenvektor repräsentiert, der Werte der Eingangsgrößen und den Wert der Zielgröße für die entsprechende Beobachtung enthält. Je nach Ausführungsform können die Beobachtungen unterschiedlich ausgestaltet sein. Vorzugsweise stellen die Beobachtungen erfasste/gemessene Zustandsgrößen eines technischen Systems bzw. Produktionschargen bzw. Rohstoffpreise und deren Einflussfaktoren dar, wie bereits im Vorangegangenen erwähnt wurde. Im Rahmen der Erfindung wird die Sensitivität der Zielgröße auf Veränderungen der einzelnen Eingangsgrößen durch Berechnung eines entsprechenden Sensitivitätswerts ermittelt. Hierzu wird zunächst ein Ensemble aus mehreren neuronalen Netzen gelernt. Eine Variante eines solchen Ensembles ist beispielhaft in der Fig. 1 wiedergegeben. Im Folgenden wird immer nur eine einzelne Zielgröße betrachtet, wobei das Verfahren auch problemlos auf mehrere Zielgrößen erweiterbar ist.

Das Ensemble der Fig. 1 bildet eine neuronale Netzstruktur NNS aus m neuronalen Netzen, welche in Fig. 1 mit NN1, NN2, ..., NNm angedeutet sind. Jedes Netz ist ein Feed-Forward-Netz mit einer Eingangsschicht, einer versteckten Schicht und einer Ausgangsschicht. Das Netz NN1 umfasst die Eingangsschicht I1, die versteckte Schicht H1 und die Ausgangsschicht O1. Das Netz NN2 umfasst die Eingangsschicht 12, die versteckte Schicht H2 und die Ausgangsschicht 02. Die Indizierung dieser Schichten mit aufsteigenden Indizes setzt sich bis zum neuronalen Netz NNm fort, welches die Eingangsschicht Im, die versteckte Schicht Hm und die Ausgangsschicht Om umfasst. Den einzelnen Eingangsschichten I1 bis Im wird jeweils ein Teil der Eingangsgrößen zugeführt, die in Fig. 1 mit x1, x2, ..., xN bezeichnet sind. Dabei repräsentiert jede einzelne der Eingangsschichten I1 bis Im immer nur einen Teil der Eingangsgrößen x1 bis xN. Weiter unten werden für die Bezeichnung der gleichen Eingangsgrößen auch tiefgestellte Indizes verwendet, d.h. es gilt $xi = x_i$ (i = 1, ..., N).

In der hier beschriebenen Variante wird für die einzelnen Eingangsschichten immer zufällig festgelegt, welcher Teil der Eingangsgrößen in der entsprechenden Eingangsschicht berücksichtigt wird. Die Zuführung der einzelnen Eingangsgrößen zu den Schichten I1 bis Im wird gemäß der Darstellung der Fig. 1 durch die Verbindung der Eingangsschicht 10 mit den einzelnen Schichten I1 bis Im repräsentiert. Die Schicht 10 enthält alle Eingangsgrößen x1 bis xN, wobei über die entsprechenden Pfeile zu den Eingangsschichten I1 bis Im Eingangsgrößen durch zufällige Auswahl herausgefiltert werden. In an sich bekannter Weise schließen sich an die Eingangsschichten der einzelnen neuronalen Netze die versteckte Schichten H1 bis Hm sowie darauf aufbauend die Ausgangsschichten O1 bis Om an. Die einzelnen Ausgangsschichten repräsentieren eine entsprechende Zielgröße, die in den Datenvektoren enthalten ist. Dabei wird über die ausgegebenen Zielgrößen aller Ausgangsschichten gemittelt, wie durch Pfeile mit dem Quotienten 1/m angedeutet ist. Man erhält somit aus den Ausgangsschichten der neuronalen Netze die gemittelte Zielgröße als Ausgabe, die mit y bezeichnet ist. Durch die Mittelung der Ausgaben der Ausgangsschichten werden Fluktuationen in den Ausgaben der einzelnen Schichten geglättet. Die Ausgabe der Zielgröße y kann auch als eine Ausgangsschicht der dargestellten neuronalen Netzstruktur NNS aufgefasst werden.

Die Netzstruktur NNS der Fig. 1 wird mit den Beobachtungen bzw. Observablen OB gelernt, d.h. alle Datenvektoren mit entsprechenden Werten von Eingangsgrößen und der Zielgröße werden als Trainingsdaten der neuronalen Netzstruktur benutzt. Das Lernen erfolgt in an sich bekannter Weise über Fehlerrückpropagation (englisch: Error Backpropagation). Die gelernte Netzstruktur der Fig. 1 wird anschließend dazu genutzt, die partiellen Ableitungen der Zielgröße jeder Beobachtung nach den einzelnen Eingangsgrößen zu ermitteln. Diese partiellen Ableitungen geben wieder, wie sensitiv die Zielgröße einer entsprechenden Beobachtung auf Änderungen der Eingangsgrößen ist. Die ermittelten Ableitungen werden als Sensitivitätswerte gespeichert und geeignet visualisiert, um einem Benutzer Aufschluss darüber zu geben, wie stark die Zielgröße von einer Eingangsgröße im betrachteten Datensatz abhängt.

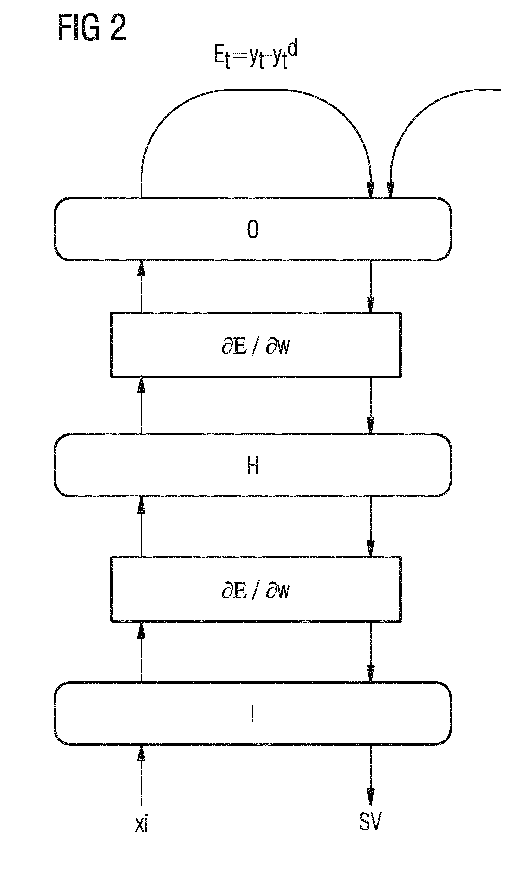

In der hier beschriebenen Ausführungsform erfolgt die Berechnung der Sensitivitätswerte basierend auf einer Modifikation der bereits oben erwähnten Fehlerrückpropagation, welche zum Lernen von neuronalen Netzen eingesetzt wird. Eine solche Berechnung der Sensitivitätswerte ist in Fig. 2 angedeutet. In dieser Figur zeichnet I die Gesamtheit der Eingangsschichten 10, I1, ..., Im der neuronalen Netzstruktur NNS aus Fig. 1. Ebenso bezeichnet H die Gesamtheit der versteckten Schichten H1, H2, ..., Hm. In gleicher Weise repräsentiert O die Ausgangsschichten O1, 02, ..., Om in Kombination der Ausgangsschicht, welche die gemittelte Zielgröße y ausgibt. Im Rahmen der modifizierten Fehlerrückpropagation der Fig. 2 wird jede Eingangsgröße xi (i = 1, ..., N) aus jeder Beobachtung durch das Netz von der Schicht I bis zur Schicht O propagiert. Die Schicht O gibt die gemittelte Zielgröße $y_t$ aus, wobei t die gerade betrachtete Beobachtung aus allen T Beobachtungen repräsentiert. Der Fehler $E_t = y_t - y_t^d$ zwischen der ausgegebenen Zielgröße $y_t$ und der tatsächlichen Zielgröße $y_t^d$ aus dem Datenvektor der Beobachtung wird dann durch das Netz rückpropagiert.

Herkömmlicherweise werden dabei die Gewichtungen w zwischen den Schichten in Abhängigkeit von dem Einfluss auf den Fehler $E_t$ angepasst, wie durch $\partial E / \partial w$ angedeutet ist. Herkömmlicherweise erhält man basierend aus den Ausgaben der Schicht I den Residualfehler $\partial(x_i)$ wie folgt:

$$\partial(x_i) = \frac{1}{T}\sum_t |\partial_t(x_i)| = \frac{1}{T}\sum_t \left|\frac{\partial E_t}{\partial x_i}\right| = \frac{1}{T}\sum_t \left|(y_t - y_t^d)\frac{\partial y_t}{\partial x_i}\right| \tag{1}$$

Im Rahmen der hier beschriebenen Ausführungsform wird nunmehr $(y_t - y_t^d)$ auf 1 gesetzt und auf die Anpassung der Gewichtungen w verzichtet. Durch diese geringfügige Abwandlung der herkömmlichen Fehlerrückpropagation erhält man für die Zielgröße $y_t$ einer entsprechenden Beobachtung Sensitivitätswerte SV für die Eingangsgrößen in der Form der Ableitungen $\frac{\partial y_t}{\partial x_i}$. Auf diese Weise können sehr elegant durch Modifikation einer Fehlerrückpropagation die Sensitivitätswerte SV bestimmt werden.

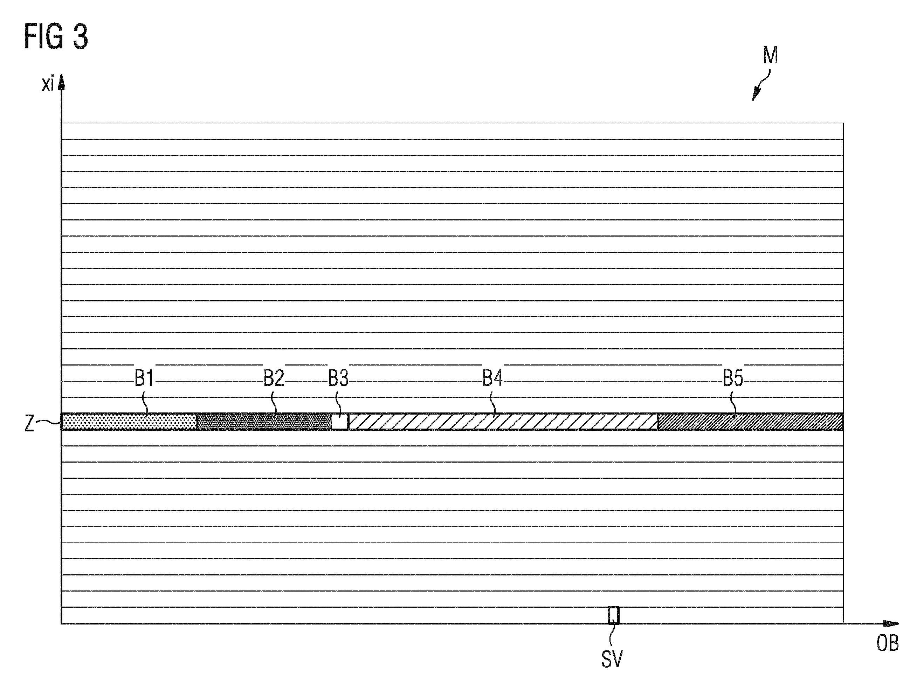

In der hier beschriebenen Ausführungsform werden die einzelnen Sensitivitätswerte SV für jede Beobachtung und jede Eingangsgröße in der Form einer Matrix auf einer graphischen Benutzerschnittstelle (z.B. einem Computermonitor) intuitiv visualisiert. Eine solche Visualisierung ist schematisch in der nachfolgend beschriebenen Fig. 3 wiedergegeben. In der Darstellung der Fig. 3 sind zur Verdeutlichung der Visualisierung Bezugszeichen sowie ein Koordinatensystem mit Abszisse OB und der Ordinate xi enthalten. Die Bezugszeichen sowie das Koordinatensystem sind in der tatsächlichen Visualisierung nicht wiedergegeben.

Die dargestellte Matrix M enthält eine Vielzahl von Zeilen und eine Vielzahl von Spalten, wobei nur die Zeilen explizit durch horizontale Linien wiedergegeben sind. Diese Linien können in der visuellen Darstellung ggf. auch weggelassen werden. Es existiert für jede Eingangsgröße xi eine Zeile sowie für jede Beobachtung OB eine Spalte. Jeder Eintrag in der Matrix M repräsentiert dabei einen Sensitivitätswert $SV = \frac{\partial y_t}{\partial x_i}$ für die Eingangsgröße xi entsprechend der Zeile und die Beobachtung mit dem Index t entsprechend der Spalte. Beispielhaft ist der Raum für einen Eintrag eines Sensitivitätswerts SV in der untersten Zeile der Matrix M wiedergegen. Die Breite des Eintrags entspricht der Breite einer nicht explizit dargestellten Spalte der Matrix M.

Die einzelnen Sensitivitätswerte sind in der gesamten Matrix über Farben codiert, wobei aus Übersichtlichkeitsgründen eine entsprechende Farbkodierung nur für die Zeile Z der Matrix M wiedergegeben ist. Alle anderen Zeilen weisen in gleicher Weise die entsprechende Farbkodierung auf, welche aber nicht dargestellt ist. In der hier beschriebenen Ausführungsform wird über die Farbe des Sensitivitätswerts festgelegt, ob die entsprechende Ableitung der Zielgröße aus der Beobachtung der entsprechenden Spalte nach der Eingangsgröße gemäß der Zeile größer oder kleiner Null ist. Negative Ableitungen werden mit blauer Farbe und positive Ableitungen mit roter Farbe wiedergegeben, wobei ggf. auch andere Farbkombinationen verwendet werden können. In der Darstellung der Fig. 3 wird in der Zeile Z blaue Farbe durch gepunktete Bereiche und rote Farbe durch schraffierte Bereiche angedeutet. Ist die Ableitung gleich Null, ist der entsprechende Bereich weiß. Über die Intensität der Farben wird die betragsmäßige Größe der Ableitung codiert, d.h. je intensiver die Farbe ist, desto größer ist der Betrag der entsprechenden Ableitung. In der Darstellung der Fig. 3 wird diese Intensität durch die Punktedichte für blaue Bereiche bzw. die Liniendichte für schraffierte Bereiche angedeutet.

Wie man aus Fig. 3 erkennt, nehmen für die Zeile Z in horizontaler Richtung von links nach rechts die Sensitivitätswerte zunächst einen kleinen negativen Wert an (Balken B1). Schließlich werden die Beträge der negativen Werte größer (Balken B2). Anschließend folgen Beobachtungen, bei denen die Ableitungen gemäß den Sensitivitätswerten im Wesentlichen den Wert Null aufweisen (Balken B3). Es folgt daraufhin ein Bereich mit kleinen positiven Ableitungen (Balken B4), an den sich ein Bereich mit größeren positiven Ableitungen anschließt (Balken B5).

Gemäß der Darstellung der Fig. 3 wird einem Benutzer einfach und intuitiv vermittelt, welche Eingangsgröße einen großen Einfluss auf die Zielgröße hat. Ergeben sich innerhalb einer Zeile intensive blaue und/oder rote Farbwerte, wird dem Benutzer angezeigt, dass die Eingangsgröße entsprechend der Zeile einen großen Einfluss auf die Zielgröße hat. Ferner erhält der Benutzer die Information, ob der Einfluss hin zu größeren Werten oder kleineren Werten der Zielgröße führt. Als Konsequenz kann der Benutzer bei einer nachfolgenden Modellierung des Verhaltens entsprechend dem Datensatz mittels eines datengetriebenen Modells (z.B. mittels eines neuronalen Netzes) nur Eingangsgrößen berücksichtigen, welche einen starken Einfluss auf die Zielgröße haben.

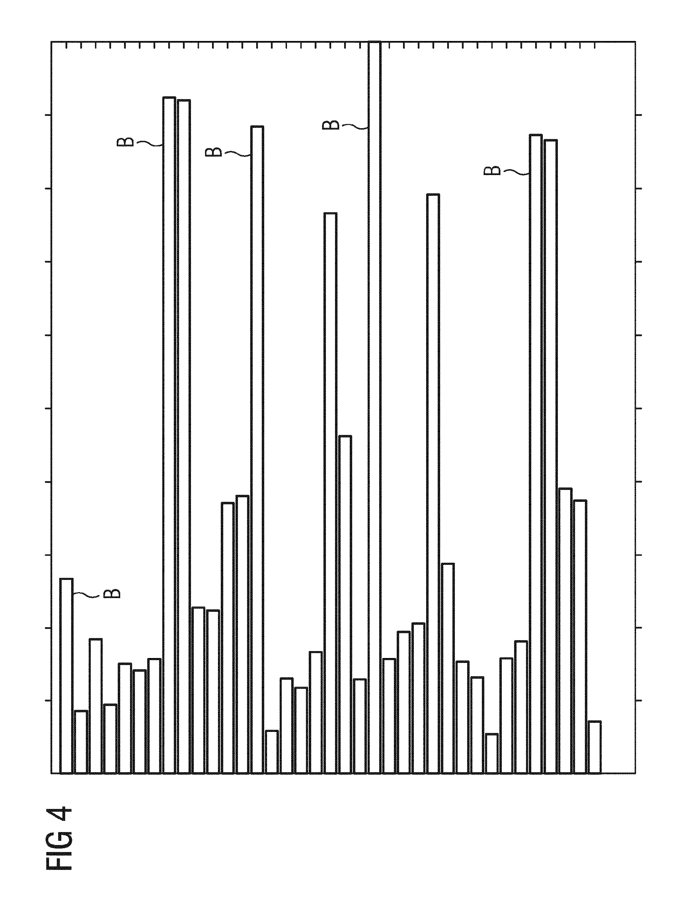

Fig. 4 zeigt eine weitere Visualisierung, die in der hier beschriebenen Ausführungsform durch einen Benutzer auf der graphischen Benutzeroberfläche aufgerufen werden kann. Die in Fig. 4 dargestellten Bezugszeichen sind in der tatsächlichen Visualisierung nicht enthalten. Gemäß dieser Visualisierung werden basierend auf einem Balkendiagramm mit einer Vielzahl von Balken B (nur teilweise mit diesem Bezugszeichen bezeichnet) die Summen der Sensitivitätswertsbeträge der jeweiligen Zeilen aus Fig. 3 (d.h. für jeweilige Eingangsgrößen) wiedergegeben. Die Länge der Balken in horizontaler Richtung zeigt die Größe der Summe an, wohingegen die vertikale Position eines Balkens die Position der Zeile aus Fig. 3 ist, welche der durch den Balken repräsentierten Eingangsgröße entspricht. Die Balken können normiert werden, so dass diejenigen Eingangsgrößen mit der größten Summe die Balkenlänge 1 hat und alle anderen relativ hierzu angeordnet werden. Auf diese Weise erhält ein Benutzer sehr schnell einen Überblick darüber, welche Eingangsgrößen besonders stark die Zielgröße beeinflussen.

In der hier beschriebenen Ausführungsform kann ggf. auch eine Weiterverarbeitung der in Fig. 4 wiedergegebenen Summen der Sensitivitätswertsbeträge durchgeführt werden. Im Rahmen dieser Weiterverarbeitung werden ein oder mehrere Eingangsgrößen mit der größten Summe gestrichen und anschließend die neuronale Netzstruktur NNS aus Fig. 1 ohne diese Eingangsgrößen neu gelernt. Schließlich werden wiederum die Summen entsprechend der Darstellung in Fig. 4 mittels der neu gelernten Netzstruktur über die modifizierte Fehlerrückpropagation bestimmt und dann wieder eine oder mehrere Eingangsgrößen mit den größten Summen gestrichen. Iterativ werden diese Schritte des Lernens der neuronalen Netzstruktur mit gestrichenen Eingangsgrößen und des erneuten Streichens von Eingangsgrößen solange wiederholt, bis ein Abbruchkriterium erfüllt ist. Auf diese Weise erhält man eine zuverlässigere Aussage dahingehend, welche Eingangsgrößen besonders relevant für die Zielgröße sind. Diese Eingangsgrößen sind die iterativ gestrichenen Eingangsgrößen.

In einer besonders bevorzugten Ausführungsform enthält die neuronale Netzstruktur gemäß Fig. 1 ferner eine Anzahl von Pseudo-Eingangsgrößen, die Einträge mit Zufallswerten in den Datenvektoren des Datensatzes repräsentieren. Diese Pseudo-Eingangsgrößen werden mit einer festgelegten Wahrscheinlichkeitsverteilung, z.B. einer Gleichverteilung oder einer Gaußschen Verteilung, zufällig bestimmt. Die Wahl der Verteilung kann sich an den Verteilungen der Eingangsgrößen orientieren. Gegebenenfalls können unterschiedliche Eingangsgrößen auch mit unterschiedlichen Wahrscheinlichkeitsverteilungen bestimmt sein. In dieser Variante wird das obige Abbruchkriterium derart festgelegt, dass dann, wenn gestrichene Eingangsgrößen Pseudo-Eingangsgrößen enthalten, das Verfahren beendet wird. In diesem Fall kann nämlich davon ausgegangen werden, dass die bei Fortsetzung des Verfahrens gestrichenen Eingangsgrößen keine Relevanz in Bezug auf die Zielgröße haben, da es bereits Zufallsvariablen gibt, welche vermeintlich einen größeren Einfluss auf die Zielgröße zu haben scheinen.

Die im Vorangegangenen beschriebenen Ausführungsformen der Erfindung weisen eine Reihe von Vorteilen auf. Insbesondere werden auf einfache Weise durch Trainieren eines Ensembles von neuronalen Netzen in Kombination mit einer modifizierten Fehlerrückpropagation Sensitivitätswerte ermittelt, die basierend auf der Ableitung der Zielgröße nach den jeweiligen Eingangsgrößen sehr gut den Einfluss der Eingangsgrößen auf die Zielgröße widerspiegeln. Darüber hinaus wird für einen Benutzer eine einfache und schnell erfassbare Visualisierung dieser Sensitivitätswerte basierend auf einer Sensitivitätsmatrix (Fig. 3) bzw. eines Balkendiagramms (Fig. 4) geschaffen. Ferner kann ggf. eine verbesserte Bestimmung von Eingangsgrößen mit großem Einfluss auf die Zielgröße über einen iterativen Prozess durch Streichen von Eingangsgrößen mit großen Summen von Sensitivitätswertsbeträgen und Neulernen des neuronalen Netzes erreicht werden. Diese destruktive Methode ist insbesondere für Datenvektoren mit einer hohen Anzahl von Eingangsgrößen vorteilhaft, da sie sehr recheneffizient gegenüber solchen Methoden ist, bei der schrittweise Eingangsgrößen mit geringen Summen der Sensitivitätswertsbeträge gestrichen werden.

## Patentansprüche

1.  Verfahren zur rechnergestützten Analyse eines Datensatzes aus Beobachtungen (OB), wobei der Datensatz für jede Beobachtung (OB) einen Datenvektor enthält, der die Werte einer Mehrzahl von Eingangsgrößen (x1, x2, ..., xN) und den Wert einer Zielgröße (y) umfasst, bei dem:

    a) basierend auf dem Datensatz eine neuronale Netzstruktur (NNS) aus mehreren unterschiedlich initialisierten neuronalen Netzen (NN1, NN2, ..., NNm) gelernt wird, wobei die neuronalen Netze (NN1, NN2, ..., NNm) jeweils eine Eingangsschicht (I1, 12, ..., Im), eine oder mehrere versteckte Schichten (H1, H2, ..., Hm) und eine Ausgangsschicht (O1, 02, ..., Om) umfassen, wobei die Eingangsschicht (I1, 12, ..., Im) eines jeweiligen neuronalen Netzes (NN1, NN2, ..., NNm) zumindest einen Teil der Eingangsgrößen (x1, x2, ..., xN) umfasst und die Ausgangsschicht (O1, 02, ..., Om) eines jeweiligen neuronalen Netzes (NN1, NN2, ..., NNm) die Zielgröße (y) umfasst, wobei die neuronale Netzstruktur (NNS) den Mittelwert der Zielgrößen (y) der Ausgangsschichten (O1, 02, ..., Om) der neuronalen Netze (NN1, NN2, ..., NNm) ausgibt;
    b) mittels der gelernten neuronalen Netzstruktur (NNS) Sensitivitätswerte (SV) ermittelt und gespeichert werden, wobei jedem Sensitivitätswert (SV) eine Beobachtung (OB) und eine Eingangsgröße (x1, x2, ..., xN) zugeordnet ist und der jeweilige Sensitivitätswert (SV) die Ableitung der Zielgröße (y) der zugeordneten Beobachtung (OB) nach der zugeordneten Eingangsgröße (x1, x2, ..., xN) enthält.

2.  Verfahren nach Anspruch 1, **dadurch gekennzeichnet, dass** die Sensitivitätswerte (SV) über eine modifizierte Fehlerrückpropagation von jeweiligen Eingangsgrößen (x1, x2, ..., xN) in der neuronalen Netzstruktur (NNS) ermittelt werden, wobei in der modifizierten Fehlerrückpropagation die Gewichtungen zwischen den Schichten der neuronalen Netzstruktur (NSS) nicht angepasst werden und anstatt des Residualfehlers die im Residualfehler enthaltene Ableitung der Zielgröße (y) der zugeordneten Beobachtung (OB) nach der zugeordneten Eingangsgröße (x1, x2, ..., xN) ausgegeben wird.

**3.** Verfahren nach einem der vorhergehenden Ansprüche, **dadurch gekennzeichnet, dass** die neuronalen Netze (NN1, NN2, ..., NNm) der neuronalen Netzstruktur (NNS) Feed-Forward-Netze sind.

**4.** Verfahren nach einem der vorhergehenden Ansprüche, **dadurch gekennzeichnet, dass** eine Eingangsschicht (I1, I2, ..., Im) eines jeweiligen neuronalen Netzes (NN1, NN2, ..., NNm) einen zufällig ausgewählten Teil der Eingangsgrößen (x1, x2, ..., xN) umfasst.

**5.** Verfahren nach einem der vorhergehenden Ansprüche, **dadurch gekennzeichnet, dass** die gespeicherten Sensitivitätswerte (SV) an einer graphischen Benutzerschnittstelle visualisiert werden.

**6.** Verfahren nach Anspruch 5, **dadurch gekennzeichnet, dass** die Visualisierung derart ausgestaltet ist, dass auf der graphischen Benutzerschnittstelle eine Matrix (M) aus einer Vielzahl von Zeilen und Spalten wiedergegeben wird, wobei eine jeweilige Zeile eine Eingangsgröße (x1, x2, ..., xN) und eine jeweilige Spalte eine Beobachtung (OB) oder umgekehrt repräsentiert, wobei ein jeweiliger, zu einer Zeile und Spalte gehöriger Eintrag der Matrix (M) visuell einen Sensitivitätswert (SV) codiert, der zu der Beobachtung (OB) und Eingangsgröße (x1, x2, ..., xN) entsprechend der Zeile und Spalte des Eintrags gehört.

**7.** Verfahren nach Anspruch 6, **dadurch gekennzeichnet, dass** das Vorzeichen der Ableitung, welche in dem Sensitivitätswert (SV) des jeweiligen Eintrags der Matrix (M) enthalten ist, codiert und insbesondere farblich codiert ist.

**8.** Verfahren nach Anspruch 7, dass eine positive Ableitung eine andere Farbe als eine negative Ableitung repräsentiert und die Farbintensität der entsprechenden Farbe umso größer wird, je größer der Betrag der Ableitung ist.

**9.** Verfahren nach einem der Ansprüche 5 bis 8, **dadurch gekennzeichnet**, das auf der graphischen Benutzerschnittstelle ferner die Summe der Sensitivitätswertsbeträge über alle Beobachtungen (OB) für eine jeweilige Eingangsgröße (x1, x2, ..., xN) visualisiert wird, insbesondere in der Form eines Balkendiagramms, wobei vorzugsweise der Balken (B) mit der größten Summe der Sensitivitätswertsbeträge auf 1 normiert ist und alle anderen Balken (B) relativ zu diesem Balken (B) dargestellt werden.

**10.** Verfahren nach einem der vorhergehenden Ansprüche, **dadurch gekennzeichnet, dass** die Beobachtungen (OB) aufeinander folgenden Zeitpunkten zugeordnet sind, wobei die Beobachtung (OB) für einen jeweiligen Zeitpunkt Eingangsgrößen (x1, x2, ..., xN) umfasst, die zu dem jeweiligen Zeitpunkt ermittelt wurden, sowie eine Zielgröße, die zu dem jeweiligen Zeitpunkt oder zu einem späteren Zeitpunkt oder zu einem früheren Zeitpunkt ermittelt wurde.

**11.** Verfahren nach einem der vorhergehenden Ansprüche, **dadurch gekennzeichnet, dass** die Schritte a) und b) iterativ wiederholt werden, wobei nach einem Schritt b) eine Anzahl von Eingangsgrößen (x1, x2, ..., xN), für welche die Summe der Sensitivitätswertsbeträge über alle Beobachtungen (OB) am größten ist, gespeichert wird und bei der nächsten Durchführung von Schritt a) nicht mehr als Eingangsgrößen (x1, x2, ..., xN) in den Eingangsschichten (I1, I2, ..., Im) der neuronalen Netze (NN1, NN2, ..., NNm) der neuronalen Netzstruktur (NNS) berücksichtigt wird.

**12.** Verfahren nach Anspruch 11, **dadurch gekennzeichnet, dass** in der neuronalen Netzstruktur (NNS) als Eingangsgrößen zusätzlich eine oder mehrere Pseudo-Eingangsgrößen berücksichtigt werden, deren Werte in den Datenvektoren durch Zufallszahlen repräsentiert sind, wobei die iterative Wiederholung der Schritte a) und b) abgebrochen wird, wenn in Schritt b) die Anzahl von Eingangsgrößen (x1, x2, ..., xN), für welche die Summe der Sensitivitätswertsbeträge über alle Beobachtungen (OB) am größten ist, eine Pseudo-Eingangsgröße enthält.

**13.** Verfahren nach einem der vorhergehenden Ansprüche, **dadurch gekennzeichnet, dass** der Datensatz aus Beobachtungen (OB) Datenvektoren umfassend Zustandsgrößen eines technischen Systems zu aufeinander folgenden Betriebszeitpunkten enthält, wobei ein Datenvektor einem jeweiligen Betriebszeitpunkt entspricht und die Werte der Eingangsgrößen (x1, x2, ..., xN) zu dem jeweiligen Betriebszeitpunkt und den Wert der Zielgröße zu dem jeweiligen Betriebszeitpunkt oder einem vergangenen Betriebszeitpunkt oder einem zukünftigen Betriebszeitpunkt umfasst.

**14.** Verfahren nach Anspruch 13, **dadurch gekennzeichnet, dass** das technische System eine Gasturbine ist, wobei die Zielgröße vorzugsweise die Emission von Stickoxiden oder ein Brennkammerbrummen ist.

15. Verfahren nach einem der vorhergehenden Ansprüche, **dadurch gekennzeichnet, dass** der Datensatz aus Beobachtungen (OB) Datenvektoren zu unterschiedlichen Produktionschargen eines Produkts umfasst, wobei ein jeweiliger Datenvektor als Werte der Eingangsgrößen (I1, 12, ..., Im) Parameter der Produktion der entsprechenden Produktionscharge und als Wert der Zielgröße ein Qualitätsmaß der entsprechenden Produktionscharge enthält.

16. Verfahren nach einem der vorhergehenden Ansprüche, **dadurch gekennzeichnet, dass** der Datensatz aus Beobachtungen (OB) Datenvektoren umfasst, welche als Wert der Zielgröße einen Rohstoffpreis und als Werte der Eingangsgrößen Einflussfaktoren auf den Rohstoffpreis enthalten.

17. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Computer ausgeführt wird.

18. Computerprogramm mit einem Programmcode zur Durchführung eines Verfahrens nach einem der Ansprüche 1 bis 16, wenn der Programmcode auf einem Computer ausgeführt wird.

## FIG 1

## FIG 2

$$E_t = y_t - y_t^d$$

0

$\partial E / \partial w$

H

$\partial E / \partial w$

I

xi

SV

FIG 3

FIG 4

**Europäisches Patentamt**
**European Patent Office**
**Office européen des brevets**

# EUROPÄISCHER RECHERCHENBERICHT

Nummer der Anmeldung

EP 14 18 4183

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 94/25933 A1 (PAVILION TECH INC [US]) 10. November 1994 (1994-11-10) * Seite 9, Zeile 20 - Seite 10, Zeile 14 * * Seite 17, Zeile 1 - Zeile 18 * ----- | 1,17,18 | INV. G05B13/02 |
| A | DE 199 04 974 A1 (ABB PATENT GMBH [DE]) 10. August 2000 (2000-08-10) * Abbildung 1 * ----- | 1,17,18 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 19. März 2015 | Kelperis, K |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

   ...........................................................................
& : Mitglied der gleichen Patentfamilie, übereinstimmendes
   Dokument

EPO FORM 1503 03.82 (P04C03)

**EP 2 996 001 A1**

## ANHANG ZUM EUROPÄISCHEN RECHERCHENBERICHT
## ÜBER DIE EUROPÄISCHE PATENTANMELDUNG NR.

EP 14 18 4183

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2015

| Im Recherchenbericht angeführtes Patentdokument | Datum der Veröffentlichung | Mitglied(er) der Patentfamilie | Datum der Veröffentlichung |
|---|---|---|---|
| WO 9425933          A1 | 10-11-1994 | AU      6669594 A<br>CA      2161655 A1<br>EP      0696372 A1<br>WO      9425933 A1 | 21-11-1994<br>10-11-1994<br>14-02-1996<br>10-11-1994 |
| DE 19904974          A1 | 10-08-2000 | KEINE | |

EPO FORM P0461

Für nähere Einzelheiten zu diesem Anhang : siehe Amtsblatt des Europäischen Patentamts, Nr.12/82

15